(19) Europäisches Patentamt
European Patent Office
Office européen des brevets

(11) **EP 4 495 630 A1**

(12) **EUROPÄISCHE PATENTANMELDUNG**

(43) Veröffentlichungstag:
**22.01.2025 Patentblatt 2025/04**

(21) Anmeldenummer: **24177199.7**

(22) Anmeldetag: **22.05.2024**

(51) Internationale Patentklassifikation (IPC):
***G01S 17/34*** *(2020.01)*

(52) Gemeinsame Patentklassifikation (CPC):
**G01S 17/34**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **20.07.2023 DE 102023119216**

(71) Anmelder: **SICK AG**
**79183 Waldkirch (DE)**

(72) Erfinder: **Baldischweiler, Boris**
**79194 Gundelfingen (DE)**

(74) Vertreter: **Manitz Finsterwald**
**Patent- und Rechtsanwaltspartnerschaft mbB**
**Martin-Greif-Strasse 1**
**80336 München (DE)**

(54) **FMCW-VERFAHREN**

(57) Ein Verfahren zur Messung einer Entfernung mittels einer FMCW-Distanzmessvorrichtung umfasst, dass: ein frequenzmodulierter Sendelichtstahl aus einem Sendesignal erzeugt und in einen Messbereich entsandt wird, wobei das Sendesignal einen vorbestimmtem Frequenzhub aufweist. Das Verfahren umfasst ferner, dass von Objekten in dem Messbereich zurückgestrahltes Licht als Empfangssignal empfangen wird. Das Verfahren umfasst ferner, dass zumindest ein Teil des Sendesignals mit dem Empfangssignal gemischt wird, um ein Mischsignal zu erzeugen, wobei das Mischsignal basierend auf einer vorbestimmten Messzeitdauer erzeugt wird, wobei die Messzeitdauer derart gewählt ist, dass das Mischsignal bevorzugt weniger als zehn Perioden aufweist. Das Verfahren umfasst ferner, dass das Mischsignal in den Frequenzbereich in ein Mischfrequenzsignal transformiert wird und basierend auf maximal zwei Messpunkten des Mischfrequenzsignals eine Entfernung zu dem Objekt ermittelt wird.

**EP 4 495 630 A1**

**Beschreibung**

Die Erfindung betrifft Verfahren zur Messung einer Entfernung mittels einer FMCW-Distanzmessvorrichtung sowie eine FMCW-Distanzmessvorrichtung.

FMCW-basierte Verfahren zur Entfernungsmessung nutzen eine Modulation der Frequenz des Sendesignals, um eine Entfernung zwischen einem Sensor und einem Objekt zu ermitteln. Um eine Frequenzmodulation des Sendesignals zu erreichen, wird dabei ein ausgesendeter Lichtstrahl in seiner optischen Wellenlänge linear über die Zeit verändert, so dass ein von einem Objekt in der Umgebung reflektiertes oder anderweitig rückgestrahltes Licht, d.h. das Empfangssignal, zum Empfangszeitpunkt eine andere Wellenlänge bzw. Frequenz als das aktuelle Sendesignal aufweist. Durch Mischung der beiden Signale ergibt sich ein Mischsignal, dessen Mischfrequenz proportional zur Laufzeit und somit zur Entfernung des Messobjekts ist, so dass basierend auf der Mischfrequenz die Entfernung zu dem Messobjekt ermittelt werden kann.

Die Mischfrequenz, welche auch als Beatfrequenz bezeichnet wird, lässt sich in der Regel mittels einer Transformation des Mischsignals in den Frequenzbereich ermitteln, wobei das transformierte Mischsignal, hierin auch Mischfrequenzsignal genannt, idealerweise an der Stelle der Beatfrequenz einen Signalpeak aufweist.

Die Messgenauigkeit, d.h. die Genauigkeit, mit der die Beatfrequenz detektiert wird, ist dementsprechend abhängig von dem Mischfrequenzsignal und insbesondere von der Qualität bzw. Auflösung des Mischfrequenzsignals. Die die Messgenauigkeit beeinflussenden Faktoren sind dabei zum einen die Steigung der Rampe, mit der die Frequenz des Sendesignals linear moduliert wird, sowie die Messzeitdauer, d.h. die Zeit, in der die Wellenlänge des Sendesignals linear verändert wird und gleichzeitig mit dem Empfangssignal gemischt wird. Eine steilere Rampe, d.h. ein schnelleres Verändern der Wellenlänge, führt zu einem größeren Frequenzunterschied zwischen Sende- und Empfangssignal, so dass die Genauigkeit der Messung verbessert werden kann. Die Messzeitdauer hingegen beeinflusst die Höhe des Signalpeaks des Mischfrequenzsignals im Vergleich zum Hintergrundrauschen. Wird die Steilheit der Rampe mit der Messzeitdauer multipliziert, so ergibt sich die optische Bandbreite der Signalquelle, welche den limitierenden Faktor für die Messgenauigkeit des Systems darstellt. Eine Erhöhung der Bandbreite ist technisch nur schwer umsetzbar, so dass es anderen Lösungen bedarf, um die Messgenauigkeit zu erhöhen.

Es ist eine der Erfindung zugrundeliegende Aufgabe, Verfahren zur Messung einer Entfernung mittels einer FMCW-Distanzmessvorrichtung sowie eine FMCW-Distanzmessvorrichtung bereitzustellen, welche die vorstehenden Probleme adressiert.

Diese Aufgabe wird durch die Gegenstände der unabhängigen Ansprüche gelöst.

Die Erfindung betrifft ein Verfahren zur Messung einer Entfernung mittels einer FMCW-Distanzmessvorrichtung, welches umfasst, dass:

ein frequenzmodulierter Sendelichtstrahl aus einem Sendesignal erzeugt und in einen Messbereich entsandt wird, wobei das Sendesignal einen vorbestimmten Frequenzhub aufweist,
von Objekten in dem Messbereich zurückgestrahltes Licht als Empfangssignal empfangen wird,
zumindest ein Teil des Sendesignals mit dem Empfangssignal gemischt wird, um ein Mischsignal zu erzeugen, wobei das Mischsignal basierend auf einer vorbestimmten Messzeitdauer erzeugt wird, wobei die Messzeitdauer derart gewählt ist, dass das Mischsignal bevorzugt weniger als zehn Perioden aufweist,
wobei das Mischsignal in dem Frequenzbereich in ein Mischfrequenzsignal transformiert wird und basierend auf maximal zwei Messpunkten des Mischfrequenzsignals eine Entfernung zu dem Objekt ermittelt wird.

Die Erfindung beruht somit auf der Idee, die Messzeitdauer, in welcher das Mischsignal erzeugt wird, möglichst klein zu halten, so dass die Steilheit der Rampe, mit der das Sendesignal in seiner Frequenz linear moduliert wird, möglichst groß gewählt werden kann, ohne dass die optische Bandbreite erhöht werden muss.

Bei dem Sendesignal kann es sich beispielsweise um ein elektrisches, insbesondere auch um ein digitales, Signal handeln. Ebenfalls kann das Sendesignal bereits ein Lichtsignal sein. Dementsprechend kann auch die Mischung von Sendesignal und Empfangssignal zumindest zum Teil elektrisch, digital (d.h. z.B. in einem DSP, Digital Signal Processor) und/oder optisch erfolgen.

Eine Lichtquelle, insbesondere ein Laser, erzeugt beispielsweise einen frequenzmodulierten Sendelichtstrahl als ein Sendesignal mit einem vorbestimmten Frequenzhub und sendet diesen Lichtstrahl in einen Messbereich.

Der Sendelichtstrahl wird von Objekten in dem Messbereich zurückgestrahlt und das zurückgestrahlte Licht als Empfangssignal am Lichtempfänger empfangen. Ein Teil des Sendesignals kann mit dem Empfangssignal im Mischer zu dem Mischsignal gemischt werden.

Der Frequenzhub des Sendesignals kann beispielsweise dadurch erzeugt werden, dass die Wellenlänge der optischen Strahlung des Sendelichtstrahls zum Beispiel beginnend bei einer unteren Frequenz (FU) während einer Modulationszeitdauer (Tmod) bis zu einer oberen Frequenz (FO) linear geändert wird (oder umgekehrt). Die Messzeitdauer (Tmeas), während der das Mischsignal erzeugt wird, ist dabei derart gewählt, dass das Mischsignal (in der Messzeitdauer) bevorzugt weniger als zehn Perioden, d.h. weniger als zehn Wellenlängen, aufweist. Beispielsweise bei einer Mischfrequenz von 5 kHz dauert einer Periode 0,2 ms, sodass sich eine maximale Messzeitdauer (Tmeas) von 2,0 ms ergibt.

Vorzugsweise wird die Messzeitdauer derart gewählt, dass das Mischsignal weniger als 8, 6 oder 4 Perioden aufweist. Dies ermöglicht es, die Steilheit der Rampe, mit der das Sendesignal in seiner Frequenz moduliert wird, entsprechend anzupassen (also weiter zu verkürzen), um eine betragsmäßig große Mischfrequenz zu erhalten und somit die Genauigkeit der Messung zu verbessern.

Bevorzugt werden bei der jeweiligen Ermittlung der Mischfrequenz (d.h. der Beatfrequenz) lediglich die Informationen aus der Messzeitdauer herangezogen, d.h. beispielsweise lediglich die Informationen aus zehn Perioden.

Bei der Mischung des Sendesignals und des Empfangssignals werden insbesondere zwei Signale unterschiedlicher Frequenz gemischt. Der Frequenzunterschied zwischen dem Sende- und dem Empfangssignal hängt dabei von der Entfernung des rückstrahlenden Objekts zur Distanzmessvorrichtung ab. Je größer die Entfernung ist, desto größer ist der sich ergebende Frequenzunterschied.

Bei der Mischung (oder auch Überlagerung) des Sendesignals und des Empfangssignals können vorläufige Mischfrequenzen entstehen, die der Summe und der Differenz der Frequenzen von Sende- und Empfangssignal entsprechen können. Insbesondere wird aus dem Mischsignal die Mischfrequenz extrahiert und weiterverarbeitet, die der Differenz der Frequenzen von Sende- und Empfangssignal entspricht. Diese Differenzfrequenz wird auch als Mischfrequenz oder Beatfrequenz bezeichnet.

Wie bereits beschrieben, ist die Mischfrequenz in dem Mischsignal enthalten, d.h. die Mischfrequenz kann aus dem Mischsignal gewonnen werden. Hierzu wird das Mischsignal in den Frequenzbereich in ein Mischfrequenzsignal transformiert, aus welchem, insbesondere direkt, die Mischfrequenz ermittelt werden kann. Beispielsweise wird das Mischsignal mittels einer Fourier-Transformation, einer Fast-Fourier-Transformation oder einer anderen geeigneten Frequenztransformation transformiert. Wie bereits vorab beschrieben ist die Mischfrequenz proportional zur Lichtlaufzeit, so dass basierend auf der Mischfrequenz die Entfernung der Distanzmessvorrichtung zum Objekt ermittelt werden kann.

Die Qualität bzw. Auflösung des Mischfrequenzsignals ist insbesondere abhängig von der gewählten Messzeitdauer, d.h. der Zeitdauer, für die das Sendesignal mit dem Empfangssignal gemischt wird. Die Auflösung des Mischfrequenzsignals im Frequenzbereich gibt beispielsweise an, in welchen Frequenzabständen, d.h. für welche Frequenzen, das Mischfrequenzsignal Signalwerte bzw. Messpunkte aufweist. Eine höhere Auflösung kann beispielsweise bedeuten, dass ein kleinerer Abstand zwischen den Frequenzen zweier benachbarter Messpunkte vorliegt, d.h. dass eine größere Anzahl an Messpunkten in einem vorgegebenen Frequenzintervall vorhanden sind. Beispielsweise wird bei einer Messzeitdauer von 1ms das Mischfrequenzsignal in mindestens 1 kHz-Schritten aufgelöst. Das bedeutet, dass das Mischfrequenzsignal für jeden n-ten kHz-Schritt einen jeweiligen Signalwert bzw. Messpunkt aufweist. Insbesondere ist die Genauigkeit der Bestimmung der Mischfrequenz abhängig von der Auflösung des Mischfrequenzsignals. Im Folgenden wird jede Frequenz, für die das Mischfrequenzsignal einen Signalwert aufweist, als "aufgelöste" Frequenz bezeichnet. Ein Messpunkt des Mischfrequenzsignals kann ferner einen Signalwert des Mischfrequenzsignals für eine jeweilige aufgelöste Frequenz angeben.

Entspricht die Mischfrequenz einer aufgelösten Frequenz des Mischfrequenzsignals, so kann das Mischfrequenzsignal an der Stelle der Mischfrequenz einen entsprechenden Signalpeak aufweisen, wobei insbesondere alle anderen Signalwerte des Mischfrequenzsignals Null oder im Wesentlichen Null betragen. Es ist zu beachten, dass bei der Mischung des Sendesignals und des Empfangssignals nicht nur die Differenz der jeweils zugehörigen Frequenzen, d.h. die Mischfrequenz, sondern auch die Summe der jeweils zugehörigen Frequenzen als Mischprodukt entstehen kann. Diese, insbesondere hochfrequente, Frequenzsumme, welche für die Bestimmung der Mischfrequenz irrelevant ist, kann in einem vorherigen Schritt beispielsweise mittels eines Tiefpassfilters herausgefiltert werden, sodass das Mischfrequenzsignal keinen Signalwert an der der Frequenzsumme entsprechenden Frequenz aufweist.

In vielen Fällen kann die Mischfrequenz jedoch zwischen zwei aufgelösten Frequenzen des Mischfrequenzsignals liegen, wobei sich, insbesondere nur, die zwei Betragswerte der den zwei aufgelösten Frequenzen des Mischfrequenzsignals zugehörigen Messpunkte in einem solchen Fall signifikant von Null unterscheiden.

Die Mischfrequenz stellt in solchen Fällen somit eine Zwischenfrequenz dar. Die den zwei aufgelösten Frequenzen des Mischfrequenzsignals zugehörigen Messpunkte können dazu verwendet werden, die Mischfrequenz, die zwischen den beiden aufgelösten Frequenzen der beiden Messpunkte liegt, zu berechnen. Insbesondere bleiben bei der Berechnung der Mischfrequenz andere, sich von den beiden Messpunkten unterscheidende Messpunkte unberücksichtigt. Beispielsweise kann basierend auf Betragswerten der beiden Messpunkte und basierend auf den den beiden Messpunkten zugehörigen Frequenzen die Mischfrequenz ermittelt werden. Insbesondere wird eine vorbestimmte Beziehung zwischen den beiden Betragswerten der zwei Messpunkte ausgenutzt, um die Mischfrequenz zu schätzen.

Die zwei aufgelösten Frequenzen, zwischen denen die Mischfrequenz liegt, können auch als Nachbarfrequenzen bezeichnet werden, da diese die zur Mischfrequenz benachbarten Frequenzen darstellen, für die das Mischfrequenzsignal einen Signalwert aufweist. Entsprechend können die den zwei Nachbarfrequenzen zugehörigen Messpunkte als Nachbarmesspunkte bezeichnet werden.

Aufgrund der Nachbarfrequenzen kann dann die (tatsächliche) Mischfrequenz ermittelt oder zumindest approximiert werden, sodass trotz der kurzen Messzeitdauer eine Messung mit guter Genauigkeit möglich wird.

Nachfolgend sind noch weitere Aspekte des Verfahrens erläutert.

Gemäß einer ersten Ausführungsform umfasst das Mischsignal eine Mischfrequenz, wobei die Mischfrequenz basierend auf einem Verhältnis der Betragswerte der beiden Messpunkte ermittelt wird und basierend auf der Mischfrequenz die Entfernung zu dem Objekt ermittelt wird. Das Verhältnis der Betragswerte der zwei Messpunkte kann beispielsweise eindeutig einem Frequenzwert, welcher der Mischfrequenz entspricht, zugeordnet sein. Vorteilhaft ist hierbei, dass die Fehleranfälligkeit der Mischfrequenzbestimmung, insbesondere in Fällen, in denen die Mischfrequenz eine Zwischenfrequenz darstellt, reduziert wird, da die Bestimmung der Mischfrequenz auf zwei Messpunkten basiert und nicht nur auf einem Messpunkt. Da die Mischfrequenz ferner basierend auf dem Verhältnis der Betragswerte der zwei Messpunkte, d.h. der entsprechenden Amplitudenwerte des Mischfrequenzsignals, ermittelt wird, ist die Mischfrequenzbestimmung nicht von den genauen Messwerten abhängig, so dass die Robustheit der Messung erhöht wird.

Eine beispielhafte Möglichkeit die Mischfrequenz zu bestimmen, besteht darin, das Verhältnis der Betragswerte der beiden Messpunkte zu bestimmen, basierend auf dem Verhältnis einen Faktor *a* zu ermitteln, welcher die relative Position der Mischfrequenz zwischen den beiden aufgelösten Frequenzen der beiden Messpunkte angibt, wobei das Verhältnis der Betragswerte eindeutig einem Faktor zugeordnet sein kann, und mittels des ermittelten Faktors *a* die Beatfrequenz bzw. Mischfrequenz wie folgt zu berechnen:

$$f_{Beat} = f_1 + a \cdot s$$

wobei $f_{Beat}$ der Mischfrequenz bzw. Beatfrequenz entspricht, $f_1$ der den beiden Messpunkten zugehörigen betragsmäßig kleineren Frequenz entspricht und *s* der Schrittweite zwischen zwei aufgelösten Frequenzen des Mischfrequenzsignals entspricht, wobei s beispielsweise durch $s = f_2 - f_1$ berechnet werden kann, wobei $f_2$ der den beiden Messpunkten zugehörigen betragsmäßig größeren Frequenz entspricht. Der Faktor *a* kann insbesondere Werte zwischen 0 und 1 annehmen.

Gemäß einer weiteren Ausführungsform wird die Mischfrequenz basierend auf einer Nachschlagetabelle ermittelt, wobei das Verhältnis der Betragswerte der zwei Messpunkte mittels der Nachschlagetabelle einem Frequenzwert, der der Mischfrequenz entspricht, zugeordnet wird. Insbesondere kann basierend auf der Nachschlagetabelle für jedes Verhältnis ein zugehöriger Frequenzwert ermittelt werden. Die Nachschlagetabelle kann vorab basierend auf bekannten Daten erstellt werden. Beispielsweise können für vorgegebene Messzeitdauern, d.h. eine vorgegebene Auflösung des Mischfrequenzsignals, und vorgegebene Mischfrequenzen zugehörige Referenzmischfrequenzsignal bekannt sein. Basierend auf den Referenzmischfrequenzsignalen kann eine Nachschlagetabelle aufgestellt werden, welche Verhältnisse der Betragswerte der beiden oben beschriebenen Messpunkte einem jeweiligen Frequenzwert zuordnet, welcher der Mischfrequenz entspricht.

Zusätzlich oder alternativ kann das Verhältnis der Betragswerte der beiden Messpunkte mittels der Ortskurven der den beiden Messpunkten zugehörigen Frequenzen ermittelt werden. Eine Ortskurve kann beispielsweise definiert sein als die Menge aller Betragswerte der Referenzmischfrequenzsignale an einer vorbestimmten Frequenz, insbesondere an einer den beiden Messpunkten zugehörigen aufgelösten Frequenz. Das Verhältnis der Betragswerte der beiden Messpunkte eines jeweiligen Referenzmischfrequenzsignals ist dabei eindeutig einer Mischfrequenz zugeordnet und unterscheidet sich von dem Verhältnis der Betragswerte der beiden Messpunkte eines anderen Referenzmischfrequenzsignals. Diese Zuordnung von Verhältnissen und Mischfrequenzen kann in der Nachschlagetabelle hinterlegt werden. Basierend auf dem Verhältnis der Betragswerte der beiden Messpunkte des Mischfrequenzsignals kann somit, insbesondere aufgrund des bekannten Wissens über die Referenzmischfrequenzsignale, die zugehörige Mischfrequenz ermittelt werden. Insbesondere kann eine Mischfrequenz, die zwischen den beiden Messpunkten zugehörigen Frequenzen liegt, somit anhand des Verhältnisses der Betragswerte der zwei Messpunkte eindeutig bestimmt werden. Die Nachschlagetabelle kann experimentell, indem beispielsweise die Referenzmischfrequenzsignale experimentell ermittelt werden, und/oder auf der Grundlage von mathematischen Berechnungen bzw. Vorhersagen ermittelt werden. Alternativ zu der Verwendung einer Nachschlagetabelle kann auch ein Blackbox-Modell, beispielsweise ein KI-Modell, dazu verwendet werden, basierend auf den zwei Messpunkten einen entsprechenden Mischfrequenzwert zu ermitteln bzw. zu schätzen. Das KI-Modell kann dazu mit einer Vielzahl von Datensätzen trainiert werden, welche jeweils die Betragswerte der zwei Messpunkte und die zugehörige (tatsächliche) Mischfrequenz umfassen.

Die Ermittlung der Mischfrequenz basierend auf der Nachschlagetabelle kann ferner umfassen, dass das Verhältnis der zwei Betragswerte der beiden Messpunkte in Form eines Quotienten gebildet wird und der dem Quotientenwert in der Nachschlagetabelle zugeordnete Frequenzwert als Mischfrequenz festgelegt wird. Alternativ ist es auch möglich, dass das Verhältnis der Betragswerte der beiden Messpunkte indirekt in die Bestimmung der Mischfrequenz eingeht, wobei beispielsweise mittels der Nachschlagetabelle zwei Betragswerte direkt einem Mischfrequenzwert zugeordnet werden, ohne dass ein Quotient gebildet wird. Die zwei Betragswerte der beiden Messpunkte können beispielsweise in einem solchen Fall mittels eines, insbesondere linearen, Filters basierend auf einer vorgegebenen Normierungsregel normiert werden, so dass die in der Nachschlagetabelle hinterlegten Werte stets mit den Betragswerten der beiden Messpunkte vergleichbar, d.h. in einem vergleichbaren Wertebereich, sind.

Gemäß einer weiteren Ausführungsform wird mittels eines Schätzers die Mischfrequenz geschätzt, wenn das Verhältnis der zwei Betragswerte der beiden Messpunkte in der Nachschlagetabelle keinem Frequenzwert zugeordnet ist. Die in der Nachschlagetabelle hinterlegten Zuordnungen basieren beispielsweise auf den Referenzmischfrequenzsignalen, wobei die Referenzmischfrequenzsignale unter der Annahme einer idealen Signalübertragung ohne Störeinflüsse gebildet sein können. Häufig sind die Messsignale, z.B. das Mischsignal und/oder das Mischfrequenzsignal, jedoch aufgrund von Rauschen oder anderen Störeinflüssen verzerrt, so dass die Betragswerte der beiden Messpunkte von den in der Nachschlagetabelle hinterlegten Betragswerten abweichen können bzw. keine entsprechenden Betragswerte in der Nachschlagetabelle existieren. Um diesem Umstand Sorge zu tragen, kann der Schätzer basierend auf dem Verhältnis der Betragswerte der beiden Messpunkte und basierend auf der Nachschlagetabelle die Mischfrequenz schätzen, wenn in der Nachschlagetabelle keine entsprechende Zuordnung existiert.

Gemäß einer weiteren Ausführungsform vergleicht der Schätzer das Verhältnis der Betragswerte der zwei Messpunkte mit den in der Nachschlagetabelle hinterlegten Verhältnissen und legt den Frequenzwert als Mischfrequenz fest, der dem in der Nachschlagetabelle hinterlegten Verhältnis zugeordnet ist, welches den betragsmäßig kleinsten Abstand zum Verhältnis der Betragswerte der zwei beiden Messpunkte aufweist. Wenn das Verhältnis der Betragswerte der beiden Messpunkte, z.B. der Quotientenwert der beiden Betragswerte, in der Nachschlagetabelle nicht vorhanden ist, kann somit dennoch die Mischfrequenz ermittelt werden. Alternativ kann der Schätzer beispielsweise mittels linearer Regression die Mischfrequenz ermitteln. Hierzu wird beispielsweise der relative Abstand des Verhältnisses der Betragswerte der beiden Messpunkte zu den beiden in der Nachschlagetabelle hinterlegten, nächsten Verhältniswerten mittels eines Faktors quantifiziert, wobei der Faktor verwendet werden kann, um basierend auf den Frequenzwerten, welche den zwei betragsmäßig nächsten Verhältniswerten zugeordnet sind, die Mischfrequenz zu ermitteln. Beispielsweise kann die Beatfrequenz bzw. Mischfrequenz wie folgt geschätzt werden:

$$f_{Beat} = f_1' + b \cdot x$$

wobei $f_{Beat}$ der Mischfrequenz bzw. Beatfrequenz, $f_1'$ der betragsmäßig kleineren Frequenz der beiden Frequenzen, die den beiden nächsten Verhältniswerten zugehörig sind, und $x$ dem Betrag der Differenz zwischen den nächsten Verhältniswerten entspricht. Der Faktor $b$ kann insbesondere Werte zwischen 0 und 1 annehmen.

Gemäß einer weiteren Ausführungsform umfassen die zwei Messpunkte einen Maximalmesspunkt des Mischfrequenzsignals und einen betragsmäßig nächstkleineren Nachbarmesspunkt.

Insbesondere wenn die Mischfrequenz zwischen zwei aufgelösten Frequenzen des Mischfrequenzsignals liegt, d.h. wenn eine Zwischenfrequenz vorliegt, ergibt sich kein eindeutiger Signalpeak an der Stelle der Mischfrequenz, sondern zwei sich von Null signifikant unterscheidende Betragswerte an den zwei aufgelösten Frequenzen, zwischen denen die Mischfrequenz liegt. Ein sich von Null signifikant unterscheidender Wert liegt beispielsweise dann vor, wenn der Wert größer als 50% oder 25% des Betragswerts des Maximalpunkts ist.

Entspricht die Mischfrequenz einer aufgelösten Frequenz des Mischfrequenzsignals, so weist das Mischfrequenzsignal in der Regel einen Signalpeak, d.h. einen Maximalmesspunkt an der jeweiligen Frequenz auf, während alle weiteren oder zumindest die beiden Messpunkte des Maximalmesspunkts Betragswerte aufweisen, welche Null oder nahezu Null betragen. Nahezu Null kann beispielsweise bedeuten, dass die Betragswerte kleiner als 30%, 25%, 10%, 5% oder 3% des Betragswerts des Maximalmesspunkts sind.

Liegt der Fall vor, dass die Mischfrequenz einer aufgelösten Frequenz entspricht, so kann basierend auf der Ermittlung, dass der zum Maximalmesspunkte benachbarte, betragsmäßig nächstkleinere Nachbarmesspunkt einen Betragswert von Null oder nahezu Null aufweist, die dem Maximalmesspunkt zugeordnete Frequenz als Mischfrequenz festgelegt werden. Wenn die Mischfrequenz nicht direkt "getroffen" wurde, d.h. die Mischfrequenz einer Zwischenfrequenz entspricht, kann beispielsweise wie vorstehend beschrieben die Mischfrequenz basierend auf dem Verhältnis der Betragswerte des Maximalmesspunkt und des betragsmäßig nächstkleineren Nachbarmesspunkts, beispielsweise mittels der zuvor beschriebenen Nachschlagetabelle, ermittelt werden. Es ist zu beachten, dass auch im ersten Fall, d.h. wenn die Mischfrequenz einer aufgelösten Frequenz entspricht, die Mischfrequenz basierend auf dem Verhältnis der Betragswerte des Maximalmesspunkt und des betragsmäßig nächstkleineren Nachbarmesspunkt ermittelt werden kann. In einem solchen Fall ergibt sich z.B. für den Quotienten der beiden Betragswerte der Quotientenwert "0" oder "∞". Somit kann beim Vorliegen eines solchen Quotientenwerts die dem Maximalmesspunkt zugehörige Frequenz als Mischfrequenz festgelegt werden.

Gemäß einer weiteren Ausführungsform wird eine Mehrzahl von Sendelichtstrahlen ausgesendet und eine Mehrzahl von entsprechenden Mischsignalen erzeugt, wobei die Mehrzahl von Mischsignalen in entsprechende Mischfrequenzsignale transformiert wird, wobei die Mehrzahl von Mischfrequenzsignalen addiert wird, um ein akkumuliertes Mischfrequenzsignal zu erhalten, wobei basierend auf zwei Messpunkten des akkumulierten Mischfrequenzsignals die Mischfrequenz ermittelt wird. Mit anderen Worten werden mehrere Messungen durchgeführt, um eine Vielzahl von Messsignalen zu erhalten und damit Fehler bzw. Störungen innerhalb einzelner Messungen zu kompensieren. Beispielsweise wird die Amplitude des ackumulierten Mischfrequenzsignals durch die Addition der Mehrzahl von Mischfrequenzsignalen um den Faktor n erhöht, während hingegen das Rauschen nur mit dem Faktor $\sqrt{n}$ erhöht wird. Ein ähnliches Ergebnis hätte auch mit einer Erhöhung des Frequenzhubs erzielt werden können. Eine derartige Erhöhung des Frequenzhubs ist jedoch, wie zuvor beschrieben, mit einer höheren Bandbreite verbunden, die nur kompliziert und kostenintensiv umgesetzt werden kann. Obwohl das resultierende akkumulierte Mischfrequenzsignal einen erhöhten Signalwert aufweist, können die vorstehenden Methoden zur Ermittlung der Mischfrequenz weiterhin angewendet werden, da sich das Verhältnis der Betragswerte der zwei Messpunkte nicht verändert. Es ist auch möglich, das akkumulierte Mischfrequenzsignal zu mitteln, um ein gemitteltes Mischfrequenzsignal zu erhalten. In diesem Fall kann zur Ermittlung der Mischfrequenz das gemittelte Mischfrequenzsignal anstelle des Mischfrequenzsignals oder des akkumulierten Mischfrequenzsignals verwendet werden.

Gemäß einer weiteren Ausführungsform wird der Betragswert des Maximalmesspunkts des Mischfrequenzsignals und/oder des akkumulierten Mischfrequenzsignals und/oder des gemittelten Mischfrequenzsignals als Gütemaß für die Bestimmung der Mischfrequenz verwendet. Wie bereits vorstehend beschrieben, ergibt sich ein größtmöglicher Signalwert, d.h. Signalpeak, wenn die Mischfrequenz einer aufgelösten Frequenz des Mischfrequenzsignals entspricht. In allen anderen Fällen kann der Betragswert des Maximalmesspunkts einen kleineren Wert annehmen. Je näher die Mischfrequenz dabei an einer aufgelösten Frequenz des Mischfrequenzsignals liegt, desto größer ist der Signalwert des Mischfrequenzsignals an der entsprechenden aufgelösten Frequenz. Folglich kann anhand der Höhe des Betragswerts des Maximalmesspunkts, d.h. des maximalen Signalwerts an einer aufgelösten Frequenz, ein Gütemaß definiert werden. Je höher der Betragswert des Maximalmesspunkts des Mischfrequenzsignals ist, desto näher liegt dabei die dem Maximalmesspunkt entsprechende aufgelöste Frequenz an der tatsächlichen Mischfrequenz.

Gemäß einer weiteren Ausführungsform kann das Verhältnis zwischen Maximalmesspunkt und zumindest einem anderen aufgelösten Messpunkt als Gütemaß verwendet werden. Der Maximalmesspunkt und der zumindest eine andere aufgelöste Messpunkt kann beispielsweise ein Messpunkt des Mischfrequenzsignals und/oder des akkumulierten Mischfrequenzsignals und/oder des gemittelten Mischfrequenzsignals sein. Insbesondere wird hiermit der Fall berücksichtigt, dass die Mischfrequenz zwischen zwei aufgelösten Frequenzen liegt. Hierbei weist die der Mischfrequenz am nächsten gelegene aufgelöste Frequenz einen maximalen Signalwert auf und die anderen Messpunkte weisen abhängig von der Entfernung zur Mischfrequenz absteigende Signalwerte auf. Je größer die Entfernung zur Mischfrequenz ist, desto kleiner ist dabei ein jeweiliger Signalwert eines zugehörigen Messpunkts.

Durch die Bildung eines Verhältnisses können insbesondere auch Remissionseffekte berücksichtigt werden. Ein weißes Ziel, d.h. ein bestrahltes weißes Objekt, kann z.B. einen hohen maximalen Signalwert und mehrere niedrigere Signalwerte liefern, wenn die Mischfrequenz einer Zwischenfrequenz entspricht. Demgegenüber kann ein schwarzes Ziel einen vergleichsweise kleineren Signalwert liefern, auch wenn die Mischfrequenz auf das Frequenzraster fällt, d.h. wenn die Mischfrequenz einer aufgelösten Frequenz entspricht. Der maximale Signalwert kann somit in einem solchen Fall kleiner sein, obwohl die Mischfrequenz direkt getroffen wurde. Um diesem Umstand Sorge zu tragen, kann wie vorstehend beschrieben ein Verhältnis zwischen Maximalmesspunkt und zumindest einem anderen aufgelösten Messpunkt als Gütemaß genutzt werden.

Gemäß einer weiteren Ausführungsform wird die Messzeitdauer iterativ angepasst, insbesondere verkleinert oder vergrößert, wobei für jede angepasste Messzeitdauer ein zugehöriges angepasstes Mischsignal und ein zugehöriges angepasstes Mischfrequenzsignal erzeugt wird, wobei basierend auf dem Gütemaß aus dem Mischfrequenzsignal und den angepassten Mischfrequenzsignalen ein endgültiges Mischfrequenzsignal ausgewählt wird, basierend auf welchem die Mischfrequenz ermittelt wird. Beispielsweise kann die Messzeitdauer, d.h. das Messzeitfenster, iterativ verkleinert oder vergrößert werden, bis ein zugehöriges Mischfrequenzsignal genau einen Signalpeak aufweist, der sich signifikant von Null unterscheidet, so dass die Genauigkeit und Zuverlässigkeit der Mischfrequenzbestimmung erhöht wird. Durch die Anpassung der Messzeitdauer wird insbesondere auch die Auflösung des Mischfrequenzsignals angepasst, so dass die jeweiligen Mischfrequenzsignale für eine Vielzahl von unterschiedlichen Frequenzen aufgelöst werden und somit die Wahrscheinlichkeit erhöht wird, die Mischfrequenz direkt zu "treffen", d.h. dass die Mischfrequenz einer aufgelösten Frequenz entspricht. Insbesondere kann die Messzeitdauer zufällig angepasst werden und der jeweilige Wert für das Gütemaß, d.h. der Betragswert des Maximalmesspunkts, aus dem jeweiligen, sich ergebenden Mischfrequenzsignal ermittelt werden, wobei insbesondere das Mischfrequenzsignal als endgültiges Mischfrequenzsignal ausgewählt wird, welches den höchsten Wert für das Gütemaß aufweist.

Die iterative Anpassung der Messzeitdauer kann ferner umfassen, dass für jede Iteration ein weiteres Sendesignal in Form eines weiteren Sendelichtstrahls ausgesendet wird, wobei für jede Iteration ein entsprechendes weiteres Empfangssignal empfangen wird, welches mit dem weiteren Sendesignal für die angepasste Messzeitdauer gemischt wird, um ein angepasstes Mischsignal zu erzeugen. Die angepassten Mischsignale werden in diesem Fall somit durch eine jeweilige Mischung eines weiteren Sendesignals und eines weiteren Empfangssignals erzeugt.

Gemäß einer weiteren Ausführungsform werden die angepassten Mischsignale aus einem Teil des Mischsignals erzeugt. Dementsprechend müssen das Sendesignal und Empfangssignal nur einmal gemischt werden. Die angepassten Mischsignale können anschließend aus dem einen Mischsignal gewonnen werden, indem Teile des Mischsignals beispielsweise weggelassen werden. Insbesondere können im Digitalraum abgetastete Punkte weggelassen werden. In einem solchen Fall entspricht ein jeweiliges angepasstes Mischsignal somit einem "verkürzten" Mischsignal. Eine aufwendige Erzeugung der angepassten Mischsignale mittels einer jeweiligen Mischung ist somit nicht notwendig.

Gemäß einer weiteren Ausführungsform wird die Messzeitdauer iterativ um einen vorgegebenen Wert oder durch Multiplikation mit einem vorgegebenen Faktor verkleinert. Die Messzeitdauer kann beispielsweise solange verkleinert werden, bis eine vorgebebene minimale Messzeitdauer erreicht ist. Die minimale Messzeitdauer gibt beispielsweise eine minimale Zeitdauer an, welche benötigt wird, um das Mischsignal in ein Mischfrequenzsignal transformieren zu können, aus dem die Mischfrequenz bestimmt werden kann. Die minimale Messzeitdauer kann beispielsweise derart festgelegt sein, dass das Mischsignal zumindest 2, 3 oder 4 Perioden aufweist. Ferner kann die Messzeitdauer derart verkleinert werden, dass die resultierenden Mischfrequenzsignale für eine Vielzahl von, insbesondere unterschiedlichen, Frequenzen aufgelöst werden. Beispielsweise kann die Messzeitdauer in jeder Iteration halbiert werden. Alternativ kann die Messzeitdauer in jeder Iteration um einen vorgegebenen Wert verkleinert werden. Insbesondere entspricht die Anzahl der Iterationen bis zum Detektieren der Mischfrequenz der Wurzel aus der Anzahl der Verkürzungsmöglichkeiten.

Gemäß einer weiteren Ausführungsform wird das Mischfrequenzsignal oder eines der angepassten Mischfrequenzsignale als endgültiges Mischfrequenzsignal ausgewählt, wenn das Mischfrequenzsignal oder das eine angepasste Mischfrequenzsignal einen Maximalmesspunkt aufweist, dessen beiden Messpunkte Betragswerte von Null oder nahezu Null aufweisen. Die Messzeitdauer wird also so lange angepasst, bis die Mischfrequenz direkt "getroffen" wird. Die Messzeitdauer kann ferner iterativ angepasst werden, bis alle Messpunkte eines entsprechenden angepassten Mischfrequenzsignals, d.h. alle aufgelösten Signalwerte des jeweiligen angepassten Mischfrequenzsignals, mit Ausnahme des Maximalmesspunkts Betragswerte von Null oder nahezu Null aufweisen. Eine derartige Bedingung stellt erhöhte Anforderungen an das Mischfrequenzsignal, so dass die Wahrscheinlichkeit einer fehlerhaften Ermittlung der Mischfrequenz reduziert wird. Folglich wird die Zuverlässigkeit der Mischfrequenzbestimmung und somit der Entfernungsmessung erhöht.

Gemäß einer weiteren Ausführungsform wird das Mischsignal mit einer von der Messzeitdauer abhängigen Abtastrate abgetastet, wobei eine der Abtastrate zugehörige Abtastzeit zumindest 1000 mal kleiner als die Messzeitdauer ist. Insbesondere erfordert eine kleinere Messzeitdauer auch eine höhere Abtastrate, um genug Auswertepunkte für die weitere Signalverarbeitung zu generieren.

Ein weiterer Aspekt der Erfindung betrifft ein Verfahren zur Messung einer Entfernung mittels einer FMCW-Distanzmessvorrichtung, welches umfasst, dass:

ein frequenzmodulierter Sendelichtstrahl aus einem Sendesignal erzeugt und in einen Messbereich entsandt wird, wobei das Sendesignal einen vorbestimmten Frequenzhub aufweist,

von Objekten in den Messbereich zurückgestrahltes Licht als Empfangssignal empfangen wird,

zumindest ein Teil des Sendesignals mit dem Empfangssignal gemischt wird, um ein Mischsignal zu erzeugen, wobei das Mischsignal basierend auf einer vorbestimmten Messzeitdauer erzeugt wird, wobei die Messzeitdauer derart gewählt ist, dass das Mischsignal bevorzugt weniger als zehn Perioden aufweist,

wobei das Mischsignal in dem Frequenzbereich in ein Mischfrequenzsignal transformiert wird,

wobei die Messzeitdauer iterativ verkleinert wird, wobei für jede verkleinerte Messzeitdauer ein zugehöriges angepasstes Mischsignal und ein zugehöriges angepasstes Mischfrequenzsignal ermittelt wird, wobei das Mischfrequenzsignal oder eines der angepassten Mischfrequenzsignale als endgültiges Mischfrequenzsignal festgelegt wird, wenn das Mischfrequenzsignal oder das eine angepasste Mischfrequenzsignal einen Maximalmesspunkt aufweist, dessen beide benachbarte Messpunkte, insbesondere alle Messpunkte mit Ausnahme des Maximalmesspunkts, Betragswerte von Null oder nahezu Null aufweisen, wobei basierend auf dem Maximalmesspunkt des endgültigen Mischfrequenzsignals eine Entfernung zu dem Objekt ermittelt wird.

Die vorstehenden Ausführungen gelten hierbei entsprechend.

Ein weiterer Aspekt der Erfindung betrifft eine FMCW-Distanzmessvorrichtung, umfassend:

eine Lichtquelle, insbesondere einen Laser, der einen frequenzmodulierten Sendelichtstrahl aus einem Sendesignal mit einem vorbestimmten Frequenzhub erzeugt und in einen Messbereich entsendet;

einen Lichtempfänger, der ausgebildet ist, von Objekten in dem Messbereich zurückgestrahltes Licht als Empfangssignal zu empfangen;

einen Mischer, der ausgebildet ist, zumindest einen Teil des Sendesignals mit dem Empfangssignal zu mischen, um ein Mischsignal zu erzeugen;

wobei das Mischsignal basierend auf einer vorbestimmten Messzeitdauer erzeugt wird, wobei die Messzeitdauer derart gewählt ist, dass das Mischsignal vorzugsweise weniger als zehn Perioden aufweist,

wobei die FMCW-Distanzmessvorrichtung ausgebildet ist, das Mischsignal in den Frequenzbereich in ein Mischfrequenzsignal zu transformieren und basierend auf maximal zwei Messpunkten des Mischfrequenzsignals eine Entfernung zu dem Objekt zu ermitteln.

Für die FMCW-Distanzvorrichtung gelten die Ausführungen zu dem erfindungsgemäßen Verfahren entsprechend. Dies gilt insbesondere hinsichtlich Vorteilen und Ausführungsformen.

Es ist zu beachten, dass jede Kombination der vorstehenden Ausführungsformen möglich ist, wenn dies nicht explizit ausgeschlossen wird.

Nachfolgend wird die Erfindung rein beispielhaft unter Bezugnahme auf die Zeichnungen dargestellt. Es zeigen:

Fig. 1     schematisch eine FMCW-Distanzmessvorrichtung,

Fig. 2     schematisch die Laserfrequenzen des Sendesignals und des Empfangssignals,

Fig. 3A    eine Mehrzahl von Mischsignalen im Zeitbereich, welche jeweils unterschiedliche Mischfrequenzen in einem Frequenzbereich zwischen 5 kHz und 6 kHz aufweisen,

Fig. 3B    die den Mischsignalen in Fig. 3A zugehörigen Mischfrequenzsignale im Frequenzbereich,

Fig. 4     die Ortskurven bei 5 kHz bzw. 6 kHz für die in Fig. 3B dargestellten Mischfrequenzsignale.

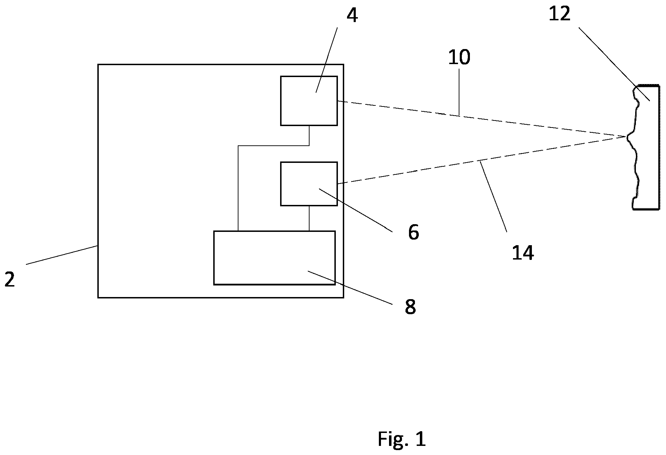

Fig. 1 zeigt eine FMCW-Distanzmessvorrichtung 2 mit einem Laser 4, einem Lichtempfänger 6, beispielsweise einer Photodiode, und einem Mischer 8. Der Laser 4 erzeugt einen frequenzmodulierten Sendelichtstrahl als ein Sendesignal 10 mit einem vorbestimmten Frequenzhub 16 und entsendet das Sendesignal 10 in einen Messbereich. Beispielsweise wird das Sendesignal 10 in seiner Frequenz beginnend bei einer unteren Frequenz 18 bis zu einer oberen Frequenz 20 (oder umgekehrt) linear moduliert. Der Sendelichtstrahl wird ferner von einem Objekt 12 in dem Messbereich zurückgestrahlt und als Empfangssignal 14 von dem Lichtempfänger 6 aufgenommen.

Das Sendesignal 10 und das Empfangssignal 14 werden anschließend in dem Mischer 8 der FMCW-Distanzmessvorrichtung 2 zu einem Mischsignal gemischt. Das Mischsignal wird dabei von dem Mischer 8 basierend auf einer vorbestimmten Messzeitdauer erzeugt, d.h. für eine vorbestimmte Zeitdauer gemischt, so dass die Länge des resultierenden Mischsignals, d.h. die Länge des Graphen des resultierenden Mischsignals, von der Messzeitdauer abhängt. Da das Mischsignal durch Mischung zweier Frequenzsignale, d.h. des Sendesignals 10 und des Empfangssignals 14, erzeugt wird, entspricht das Mischsignal einem Signal mit einer entsprechenden Mischfrequenz. Das bedeutet, das Mischsignal ist ein Frequenzsignal bzw. ein periodisches Signal, wobei die Mischfrequenz des Mischsignals, die sogenannte Beatfrequenz 24, einer Differenz zwischen der Frequenz des Sendesignals 10 und der Frequenz des Empfangssignals 14 entspricht. Wenn das Mischsignal neben der Differenzfrequenz auch weitere Mischfrequenzen aufweisen sollte, kann das Mischsignal beispielsweise mittels eines Filters derart modifiziert werden, dass das Mischsignal ausschließlich die Differenzfrequenz des Sendesignals 10 und Empfangssignals 14 aufweist.

Die Messzeitdauer wird derart gewählt, dass das Mischsignal weniger als zehn Perioden aufweist. Somit wird die Messzeitdauer so gewählt, dass ein möglichst "kurzes" Mischsignal erhalten wird. Dies hat den Vorteil, dass die Steigung der Rampe der linearen Frequenzmodulation möglichst groß gewählt werden kann, ohne die Bandbreite erhöhen zu müssen. Hierdurch kann beispielsweise die Messgenauigkeit erhöht werden. Die Mischung des Sendesignals 10 und Empfangssignals 14 kann insbesondere optisch oder elektrisch erfolgen. Das erzeugte Mischsignal wird anschließend in den Frequenzbereich in ein Mischfrequenzsignal transformiert, wobei basierend auf maximal zwei Messpunkten des Mischfrequenzsignals die dem Mischsignal zugrundeliegende Beatfrequenz 24 ermittelt wird, wie untenstehend noch ausführlicher beschrieben wird. Basierend auf der Beatfrequenz 24 kann die Entfernung zu dem Objekt 12 ermittelt werden.

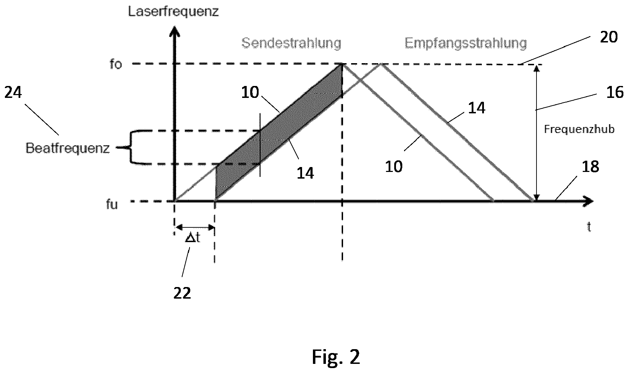

Fig. 2 zeigt die Laserfrequenzen des Sendesignals 10 und des Empfangssignals 14. Der Frequenzhub 16 der beiden Signale erstreckt sich von einer unteren Frequenz (fu) 18 hin zu einer oberen Frequenz (fo) 20, die Laserfrequenz des Sendesignals 10 und die Laserfrequenz des Empfangssignals 14 sind um ein Zeitintervall ($\Delta t$) 22 in x-Achsenrichtung und um eine Beatfrequenz 24 in y-Achsenrichtung versetzt.

Die entstehende Beatfrequenz 24 und auch die Frequenz des Mischsignals sind direkt abhängig von dem Zeitintervall Δt 22, welches das Sendesignal 10 benötigt hat, um die Strecke von der FMCW-Distanzmessvorrichtung 10 hin zu dem Objekt 12 und von dem Objekt 12 zurück zur FMCW-Distanzmessvorrichtung 2 zurückzulegen und erlauben somit Rückschlüsse auf die Entfernung zu dem Objekt 12.

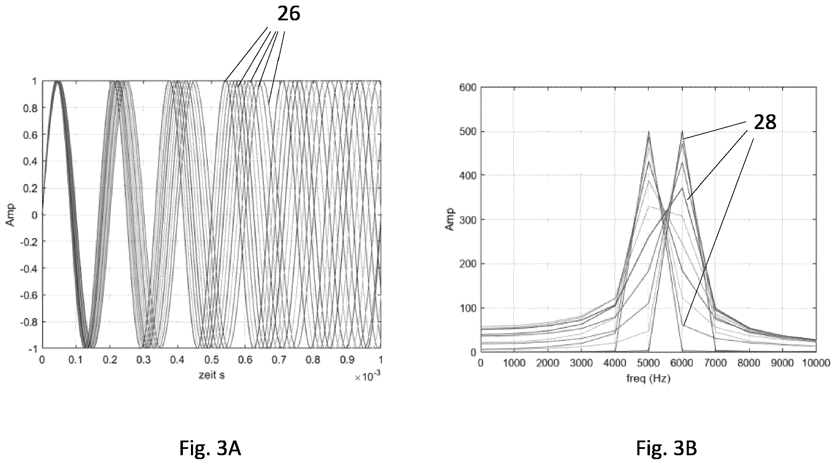

Fig. 3A zeigt eine Darstellung unterschiedlicher Mischsignale 26 im Zeitbereich, wobei die unterschiedlichen Mischsignale 26 Mischfrequenzen zwischen 5 kHz und 6 kHz im Abstand von 0,1 kHz aufweisen. Die sinusförmigen Mischsignale 26 wurden hierbei für eine Messzeitdauer von 1 ms erzeugt, d.h. der Mischer 8 hat das Sendesignal 10 und Empfangssignal 14 für eine Zeitdauer von 1 ms miteinander gemischt. Die Messzeitdauer wurde also derart gewählt, dass die Mischsignale 5 bis 6 Perioden aufweisen.

In Fig. 3B sind die den Mischsignalen 26 der Fig. 3A zugehörigen Mischfrequenzsignale 28 im Frequenzbereich dargestellt. Wie aus Fig. 3B ersichtlich ist, sind die Mischfrequenzsignale 28 für die hier verwendete Messzeitdauer von 1 ms mit einer Auflösung von 1 kHz-Schritten darstellbar, d.h. ein jeweiliges Mischfrequenzsignal 28 weist nur für jeden n-ten kHz-Schritt einen Signalwert auf. Grundsätzlich führt eine größere Messzeitdauer zu einer höheren Auflösung des Mischfrequenzsignals und damit zu einem entsprechend "feineren" Mischfrequenzsignal.

Da die Beatfrequenzen 24 der Mischsignale 26 im vorliegenden Fall zwischen 5 kHz und 6 kHz liegen, weisen die entsprechenden Mischfrequenzsignale 28 Signalpeaks bzw. sich von Null signifikant unterscheidende Signalwerte bei 5 kHz und 6 kHz auf. Wie in Fig. 3B gezeigt, existieren nur zwei Mischfrequenzsignale 28, welche einen Signalpeak aufweisen, d.h. welche nur einen Signalwert aufweisen, der sich von Null unterscheidet. Diese beiden Mischfrequenzsignale 28 entsprechen den Mischsignalen 26, die eine Beatfrequenz 24 von genau 5 kHz bzw. 6 kHz aufweisen. Nur für diese Fälle erlaubt die Auflösung der Mischfrequenzsignale 28, dass die Beatfrequenz 24 aus dem Mischfrequenzsignal 28 eindeutig und insbesondere ohne weitere Berechnung bestimmt wird, da nur in diesen Fällen die Beatfrequenz 24 einer aufgelösten Frequenz entspricht.

In allen anderen Fällen liegt die jeweilige Beatfrequenz 24 zwischen zwei aufgelösten Frequenzen, d.h. zwischen 5 kHz und 6 kHz. Entsprechend ergibt sich in diesen Fällen auch kein eindeutiger Signalpeak für das jeweilige Mischfrequenzsignal 28. Vielmehr ergeben sich zwei Messpunkte bei 5 kHz und 6 kHz, deren Signalwerte sich signifikant von Null unterscheiden. Für derartige Fälle wird das Verhältnis dieser zwei Messpunkte genutzt, um die Beatfrequenz 24 zu ermitteln. Hierzu wird beispielsweise das Verhältnis der Betragswerte der beiden Messpunkte, insbesondere der betragsmäßig größten Messpunkte der jeweiligen Mischfrequenzsignale 28, für eine vorbestimmte Anzahl von Beatfrequenzen 24 gespeichert und der zugehörigen Beatfrequenz 24, beispielsweise in einer Nachschlagetabelle, zugeordnet. Zusätzlich oder alternativ kann auch die Ortskurve für die Frequenz 5 kHz bzw. 6 kHz basierend auf den jeweiligen Mischfrequenzsignalen 28 hinterlegt werden.

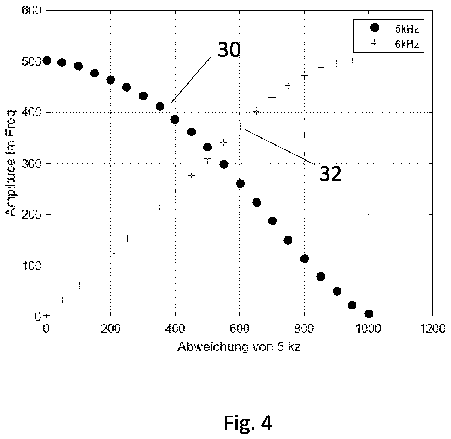

Eine jeweilige Ortskurve kann beispielsweise alle Betragswerte der in Fig. 3B gezeigten Mischfrequenzsignale 28 an einer aufgelösten Frequenz, d.h. 5 kHz oder 6 kHz, umfassen, wobei die Betragswerte auf der Y-Achse und die zugehörigen Beatfrequenzen 24 auf der X-Achse dargestellt werden können, wie in Fig. 4 gezeigt.

Die Ortskurven bzw. die Signalwerte der Ortskurven können somit für unterschiedliche Beatfrequenzen 24 in Relation zueinander gesetzt werden, um eine Zuordnungsregel zu erhalten. Für ein empfangenes Mischsignal 26 kann somit die Beatfrequenz 24 basierend auf den zwei betragsmäßig größten Signalwerten des Mischfrequenzsignals 28 ermittelt werden, indem die hinterlegte bzw. gespeicherte Zuordnung der zwei Messpunkte verwendet wird. Diese Zuordnung kann beispielsweise in einer Nachschlagetabelle oder einem anderen geeigneten Format gespeichert sein.

Fig. 4 zeigt eine Darstellung der vorstehend erwähnten Ortskurven für 5 kHz und 6 kHz mit einer Auflösung von 50 Hz. Die 5 kHz-Ortskurve umfasst die Signalwerte der Mischfrequenzsignale, welche bei der Frequenz 5 kHz ausgewertet sind, für unterschiedliche Beatfrequenzen 24 zwischen 5 kHz und 6 kHz im Abstand von 50 Hz. Entsprechend umfasst die 6 kHz-Ortskurve alle Signalwerte der Mischfrequenzsignale 26, welche bei der Frequenz 6 kHz ausgewertet sind, für unterschiedliche Beatfrequenzen 24 zwischen 5 kHz und 6 kHz im Abstand von 50 Hz.

Wie aus Fig. 4 ersichtlich ist, ergibt sich beispielsweise für eine Beatfrequenz 24 von 5,2 kHz ein jeweiliger Signalwert von ca. 460 für die 5kHz-Ortskurve 30 und ein jeweiliger Signalwert von ca. 120 für die 6kHz-Ortskurve 32. Die beiden Signalwerte werden ferner in Relation zueinander gesetzt, indem beispielsweise der Quotient der beiden Signalwerte gebildet wird. In diesem Fall weist der Quotient einen Quotientenwert von $\frac{460}{120}$ auf. Anschließend kann der Quotientenwert mittels einer Nachschlagetabelle einer Beatfrequenz 24 zugeordnet werden. Basierend auf dem Verhältnis der beiden Signalwerte kann somit die Beatfrequenz 24 eindeutig ermittelt werden. Insbesondere kann die Beatfrequenz 24 unabhängig von den absoluten Werten der einzelnen Signalwerte ermittelt werden, da nur die relative Beziehung zwischen den beiden Signalwerten für die Ermittlung der Beatfrequenz 24 entscheidend ist. Aus der Beatfrequenz 24 kann schließlich die Entfernung zum Objekt 12 berechnet werden, wobei der Entfernungswert von der FMCW-Distanzmessvorrichtung 2 ausgegeben werden kann, ggf. nach einer Mittelung über mehrere berechnete Entfernungswerte.

**Bezugszeichenliste**

| | |
|---|---|
| 2 | FMCW-Distanzmessvorrichtung |
| 4 | Laser |
| 6 | Lichtempfänger |
| 8 | Mischer |
| 10 | Sendesignal |
| 12 | Objekt |
| 14 | Empfangssignal |
| 16 | Frequenzhub |
| 18 | untere Frequenz |
| 20 | obere Frequenz |
| 22 | Zeitintervall |
| 24 | Beatfrequenz |
| 26 | Mischsignale |
| 28 | Mischfrequenzsignale |
| 30 | 5kHz-Ortskurve |
| 32 | 6kHz-Ortskurve |

**Patentansprüche**

1. Verfahren zur Messung einer Entfernung mittels einer FMCW-Distanzmessvorrichtung (2), welches umfasst, dass:

    ein frequenzmodulierter Sendelichtstahl aus einem Sendesignal (10) erzeugt und in einen Messbereich entsandt wird, wobei das Sendesignal (10) einen vorbestimmten Frequenzhub (16) aufweist,
    von Objekten (12) in dem Messbereich zurückgestrahltes Licht als Empfangssignal (14) empfangen wird,
    zumindest ein Teil des Sendesignals (10) mit dem Empfangssignal (14) gemischt wird, um ein Mischsignal (26) zu erzeugen, wobei das Mischsignal (26) basierend auf einer vorbestimmten Messzeitdauer erzeugt wird, wobei die Messzeitdauer derart gewählt ist, dass das Mischsignal (26) bevorzugt weniger als zehn Perioden aufweist,
    wobei das Mischsignal (26) in den Frequenzbereich in ein Mischfrequenzsignal (28) transformiert wird und basierend auf maximal zwei Messpunkten des Mischfrequenzsignals (28) eine Entfernung zu dem Objekt (12) ermittelt wird.

2. Verfahren nach Anspruch 1,
wobei das Mischsignal (26) eine Mischfrequenz (24) umfasst, wobei die Mischfrequenz (24) basierend auf einem Verhältnis der Betragswerte der zwei Messpunkte ermittelt wird und basierend auf der Mischfrequenz (24) die Entfernung zu dem Objekt (12) ermittelt wird.

3. Verfahren nach Anspruch 2,
wobei die Mischfrequenz (24) basierend auf einer Nachschlagetabelle ermittelt wird, wobei das Verhältnis der zwei Betragswerte der Messpunkte mittels der Nachschlagetabelle einem Frequenzwert, der der Mischfrequenz (24) entspricht, zugeordnet wird.

4. Verfahren nach Anspruch 3,
wobei mittels eines Schätzers die Mischfrequenz (24) geschätzt wird, wenn das Verhältnis der Betragswerte der zwei Messpunkte in der Nachschlagetabelle keinem Frequenzwert zugeordnet ist.

5. Verfahren nach Anspruch 4,
wobei der Schätzer das Verhältnis der Betragswerte der zwei Messpunkte mit den in der Nachschlagetabelle hinterlegten Verhältnissen vergleicht und den Frequenzwert als Mischfrequenz (24) festlegt, der dem in der Nachlagetabelle hinterlegten Verhältnis zugeordnet ist, welches den betragsmäßig kleinsten Abstand zum Verhältnis der Betragswerte der zwei Messpunkte aufweist.

6. Verfahren nach einem der vorstehenden Ansprüche,
wobei die zwei Messpunkte einen Maximalmesspunkt des Mischfrequenzsignals (28) und einen betragsmäßig nächstkleineren Nachbarmesspunkt umfassen.

7. Verfahren nach einem der vorstehenden Ansprüche,
wobei eine Mehrzahl von Sendelichtstrahlen ausgesendet wird und eine Mehrzahl von entsprechenden Mischsignalen (26) erzeugt wird, wobei die Mehrzahl von Mischsignalen (26) in entsprechende Mischfrequenzsignale (28) transformiert wird, wobei die Mehrzahl von Mischfrequenzsignalen (28) addiert wird, um ein akkumuliertes Mischfrequenzsignal zu erhalten, wobei basierend auf zwei Messpunkten des akkumulierten Mischfrequenzsignals die Mischfrequenz (24) ermittelt wird.

8. Verfahren nach Anspruch 7,
wobei der Betragswert des Maximalmesspunkts des Mischfrequenzsignals (28) und/oder des akkumulierten Mischfrequenzsignals als Gütemaß für die Bestimmung der Mischfrequenz (24) verwendet wird.

9. Verfahren nach Anspruch 8,
wobei die Messzeitdauer iterativ angepasst, insbesondere verkleinert oder vergrößert, wird, wobei für jede angepasste Messzeitdauer ein zugehöriges angepasstes Mischsignal und zugehöriges angepasstes Mischfrequenzsignal erzeugt wird, wobei basierend auf dem Gütemaß aus dem Mischfrequenzsignal (28) und den angepassten Mischfrequenzsignalen ein endgültiges Mischfrequenzsignal ausgewählt wird, basierend auf welchem die Mischfrequenz (24) ermittelt wird.

10. Verfahren nach Anspruch 9,
    wobei die angepassten Mischsignale aus einem Teil des Mischsignals (26) erzeugt werden.

11. Verfahren nach Anspruch 9 oder 10,
    wobei die Messzeitdauer iterativ um einen vorgegebenen Wert oder durch Multiplikation mit einem vorgebenen Faktor verkleinert wird.

12. Verfahren nach einem der Ansprüche 9 bis 11,
    wobei das Mischfrequenzsignal (28) oder eines der angepassten Mischfrequenzsignale als endgültiges Mischfrequenzsignal ausgewählt wird, wenn das Mischfrequenzsignal (28) oder das eine angepasste Mischfrequenzsignal einen Maximalmesspunkt aufweist, dessen beiden Messpunkte Betragswerte von Null oder nahezu Null aufweisen.

13. Verfahren nach einem der vorstehenden Ansprüche,
    wobei das Mischsignal (26) mit einer von der Messzeitdauer abhängigen Abtastrate abgetastet wird, wobei eine der Abtastrate zugehörige Abtastzeit zumindest 1000 mal kleiner als die Messzeitdauer ist.

14. Verfahren zur Messung einer Entfernung mittels einer FMCW-Distanzmessvorrichtung (2), welches umfasst, dass:

    ein frequenzmodulierter Sendelichtstahl aus einem Sendesignal (10) erzeugt und in einen Messbereich entsandt wird, wobei das Sendesignal (10) einen vorbestimmtem Frequenzhub (16) aufweist,
    von Objekten (12) in dem Messbereich zurückgestrahltes Licht als Empfangssignal (14) empfangen wird,
    zumindest ein Teil des Sendesignals (10) mit dem Empfangssignal (14) gemischt wird, um ein Mischsignal (26) zu erzeugen, wobei das Mischsignal (26) basierend auf einer vorbestimmten Messzeitdauer erzeugt wird, wobei die Messzeitdauer derart gewählt ist, dass das Mischsignal (26) bevorzugt weniger als zehn Perioden aufweist,
    wobei das Mischsignal (26) in den Frequenzbereich in ein Mischfrequenzsignal (28) transformiert wird,
    wobei die Messzeitdauer iterativ verkleinert wird, wobei für jede verkleinerte Messzeitdauer ein zugehöriges angepasstes Mischsignal und ein zugehöriges angepasstes Mischfrequenzsignal ermittelt wird, wobei das Mischfrequenzsignal (28) oder eines der angepassten Mischfrequenzsignale als endgültiges Mischfrequenzsignal festgelegt wird, wenn das Mischfrequenzsignal (28) oder das eine angepasste Mischfrequenzsignal einen Maximalmesspunkt aufweist, dessen beide benachbarte Messpunkte Betragswerte von Null oder nahezu Null aufweisen, wobei basierend auf dem Maximalmesspunkt des endgültigen Mischfrequenzsignals eine Entfernung zu dem Objekt (12) ermittelt wird.

15. FMCW-Distanzmessvorrichtung, umfassend:

    eine Lichtquelle, insbesondere einen Laser (4), der einen frequenzmodulierten Sendelichtstrahl aus einem Sendesignal (10) mit einem vorbestimmten Frequenzhub (16) erzeugt und in einen Messbereich entsendet;
    einen Lichtempfänger (6), der ausgebildet ist, von Objekten (12) in dem Messbereich zurückgestrahltes Licht als Empfangssignal (14) zu empfangen;
    einen Mischer (8), der ausgebildet ist, zumindest einen Teil des Sendesignals (10) mit dem Empfangssignal (14) zu mischen, um ein Mischsignal (26) zu erzeugen,
    wobei das Mischsignal (26) basierend auf einer vorbestimmten Messzeitdauer erzeugt wird, wobei die Messzeitdauer derart gewählt ist, dass das Mischsignal (26) bevorzugt weniger als zehn Perioden aufweist,
    wobei die FMCW-Distanzmessvorrichtung (2) ausgebildet ist, das Mischsignal in den Frequenzbereich in ein Mischfrequenzsignal (28) zu transformieren und basierend auf maximal zwei Messpunkten des Mischfrequenzsignals (28) eine Entfernung zu dem Objekt (12) zu ermitteln.

Fig. 1

Fig. 2

Fig. 3B

Fig. 3A

Fig. 4

Europäisches
Patentamt

European
Patent Office

Office européen
des brevets

## EUROPÄISCHER RECHERCHENBERICHT

**Nummer der Anmeldung**

EP 24 17 7199

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/293960 A1 (KREITINGER SETH [US] ET AL) 23. September 2021 (2021-09-23) | 1-7,13, 15 | INV. G01S17/34 |
| A | * Absätze [0002], [0035], [0038], [0042], [0064], [0065], [0073], [0088], [0089], [0098]; Abbildungen 1,3,8,9 * | 8-12,14 | |
| | - - - - - | | |
| A | DE 41 04 792 A1 (BOSCH GMBH ROBERT [DE]) 20. August 1992 (1992-08-20) * Seite 2, Zeilen 50-53 * | 1-15 | |
| | - - - - - | | |
| A | EP 4 083 657 A1 (SICK AG [DE]) 2. November 2022 (2022-11-02) * das ganze Dokument * | 1-15 | |
| | - - - - - | | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 22. Oktober 2024 | Metz, Carsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 7199

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-2024

| Im Recherchenbericht angeführtes Patentdokument | Datum der Veröffentlichung | Mitglied(er) der Patentfamilie | | Datum der Veröffentlichung |
|---|---|---|---|---|
| US 2021293960 A1 | 23-09-2021 | US | 2021293960 A1 | 23-09-2021 |
| | | WO | 2020018805 A1 | 23-01-2020 |
| DE 4104792 A1 | 20-08-1992 | DE | 4104792 A1 | 20-08-1992 |
| | | EP | 0499952 A1 | 26-08-1992 |
| | | US | 5252981 A | 12-10-1993 |
| EP 4083657 A1 | 02-11-2022 | EP | 4083657 A1 | 02-11-2022 |
| | | US | 2022342071 A1 | 27-10-2022 |

EPO FORM P0461

Für nähere Einzelheiten zu diesem Anhang : siehe Amtsblatt des Europäischen Patentamts, Nr.12/82